# EUROPÄISCHE PATENTSCHRIFT

(11) **EP 0 443 672 B1**
(45) Veröffentlichungstag und Bekanntmachung des Hinweises auf die Patenterteilung: **24.01.1996**
(21) Anmeldenummer: 91200318.3
(22) Anmeldetag: 15.02.1991
(51) Int. Cl.: H04L 12/56

(54) **Asynchrones Zeitvielfachübermittlungssystem**
Asynchronous transfer mode system
Système à mode de transfert asynchrone

(30) Priorität: 19.02.1990 DE 4004956
(43) Veröffentlichungstag der Anmeldung: 28.08.1991
(73) Patentinhaber: Philips Patentverwaltung GmbH, D-22335 Hamburg (DE); Philips Electronics N.V., NL-5621 BA Eindhoven (NL)
(72) Erfinder: Mertelmeier, Christine, W-8520 Erlangen (DE); Wölker, Roland, Dr. rer. nat., W-8520 Erlangen (DE)
(74) Vertreter: Peuckert, Hermann, Dipl.-Ing.

(56) Entgegenhaltungen:
- EP-A- 0 256 702
- EP-A- 0 338 558
- WO-A-86/02512

## Beschreibung

Die Erfindung bezieht sich asynchrones Zeitvielfachübermittlungssystem mit einem Koppelelement,
- das zur Übertragung von bestimmten auf Zubringerleitungen eingetroffenen Zellen auf eine Abnehmerleitung vorgesehen ist,
- das mittels jeweils eines mit einer Zubringerleitung gekoppelten Vergleichers zur Prüfung vorgesehen ist, ob die in den Zellen enthaltene Wegekennung der Abnehmerleitung zugeordnet ist, und
- das eine Multiplexeranordnung zur Kopplung der Zubringerleitungen mit Puffern und zur gleichmäßigen Verteilung der für die Abnehmerleitung bestimmten, während eines Zeitrahmens eintreffenden Zellen auf die Puffer enthält.

Bei dem asynchronen Zeitvielfachübermittlungssystem werden Nutzinformationen, z.B. Fernsprech-, Bild- oder Tonsignale, in Blöcken fester Länge gesendet. Als ein Block fester Länge wird eine Zelle bezeichnet, die eine vorbestimmte Anzahl von Bits in serieller Reihenfolge aufweist. Jede Zelle besteht aus einem Kopf- und einem Informationsfeld. In dem Kopffeld ist u.a. die Wegekennung für die Zelle untergebracht. Unter einer Wegekennung ist eine Verbindungskennung oder eine Wegelenkungsinformation zu verstehen. In der Verbindungskennung ist die Angabe über das Ziel bzw. Teilziel der Nutzinformation enthalten. Die Wegelenkungsinformation wird innerhalb des Systems in bestimmten Übermittlungsanordnungen hinzugefügt und enthält eine Angabe über ein Teilziel innerhalb der Übermittlungsanordnung. Die Nutzinformation ist im Informationsfeld untergebracht.

Zellen sind aufeinanderfolgend bestimmten Zeitabschnitten (Zeitrahmen) zugeordnet. Die Dauer eines solche Zeitabschnittes hängt von der zugrundegelegten Taktfrequenz der Übermittlungskomponente ab. Falls keine Nutzinformation vorhanden ist, werden in einem solchen Zeitrahmen Leerzellen übertragen, d.h. Zellen ohne Nutzinformation. Zellen, die eine Nutzinformation beinhalten, werden als Nutzzellen bezeichnet.

Bei der Übertragung der Zellen zwischen Teilnehmern durchlaufen die Zellen Koppelfelder, in denen Wege durch Auswertung der Wegekennung hergestellt werden. Ein solches Koppelfeld kann sich dabei aus mehreren Koppelfeldblöcken zusammensetzen. Ein solcher Koppelfeldblock mit mehreren Zubringer- und Abnehmerleitungen besteht aus mehreren Koppelelementen. Ein Koppelelement enthält mehrere Zubringerleitungen und eine Abnehmerleitung. In einem Koppelelement werden dabei Zellen von einer Zubringerleitung auf eine Abnehmerleitung gegeben. Bei Eintreffen von Zellen auf mehreren Zubringerleitungen während eines Zeitrahmens, die auf eine Abnehmerleitung zugreifen wollen, sind besondere Strategien zur Kopplung notwendig.

Aus dem Aufsatz "The Knockout Switch: A simple, modular architecture for high-performance packet switching" von Y.S.Yeh, M.G. Hluchyj und A.S. Acampora, International Switching Symposium, 1987, Proceedings, Thursday, March 17, 1987, Volume 3 of 4, Session B 10.2 ist ein Koppelelement bekannt, das mit Zubringerleitungen verbunden ist. Das Koppelelement enthält einen jeder Zubringerleitung zugeordneten Vergleicher (packet-filter), der überprüft, ob die Wegekennung der gelieferten Zelle mit der Adresse des Ausgangs der vom Koppelelement abgehenden Abnehmerleitung übereinstimmt. Falls keine Übereinstimmung vorhanden ist, wird dies durch Nullsetzung eines hinzugefügten Bits (activity bit) gekennzeichnet. Im umgekehrten Fall wird dieses Bit gleich Eins gesetzt. In einem nachfolgenden Konzentrator (concentrator) wird die Anzahl der Leitungen von N auf L Leitungen verringert, so daß, wenn auf M Zubringerleitungen, wobei L < M ≤ N, Zellen mit einer Nutzinformation eintreffen, einige Zellen verlorengehen. In einem an den Konzentrator angeschlossenen Netzwerk (shifter) werden die vom Konzentrator während eines Zeitrahmens ankommenden Zellen, die ein hinzugefügtes Bit mit einer Eins aufweisen, in das Netzwerk eingelesen. In dem Netzwerk werden die Zellen so verschoben, daß jeder Ausgang des Netzwerkes gleichmäßig Zellen abgibt. Die Ausgänge des Netzwerkes sind jeweils mit einem Puffer verbunden. Der Auslesevorgang verläuft bei einem Netzwerk mit beispielsweise acht Ein- und Ausgängen unter der Voraussetzung, daß bei einem ersten Zeitrahmen fünf Nutzzellen und bei einem zweiten Zeitrahmen vier Nutzzellen eintreffen, folgendermaßen: Zuerst werden die fünf Nutzzellen auf fünf Ausgänge gegeben. Beim zweiten Zeitrahmen werden drei Zellen auf die restlichen drei beim vorherigen Zeitrahmen keine Zellen liefernden Ausgänge geleitet und die weitere Nutzzelle auf einen der anderen fünf Ausgänge. Die Auslesung wird also so gesteuert, daß eine gleichmäßige Belegung der Puffer erreicht wird. Aufwendig bei diesem Koppelelement ist, daß ein Bit (activity bit) zur Steuerung der Zellen hinzugefügt wird und daß alle Zellen mit einer Nachricht über den Konzentrator weitergegeben werden. Die Selektion der für die Abnehmerleitung bestimmten Zellen findet erst durch das Netzwerk statt. Außerdem können sich bei diesem Netzwerk, das ein Omega-Netzwerk ist, Blockierungen ergeben. Damit hierbei keine Zellen verloren gehen, sind im Netzwerk Speicher erforderlich, wodurch die Durchlaufzeit der Zellen im Netzwerk vergrößert wird.

Aus dem Dokument EP-A-0 256 702 ist das oben beschriebene System ebenfalls bekannt. Hier ist jedoch auch der Fall N = L beschrieben, bei dem keine Zellen durch einen Konzentrator verlorengehen.

Der Erfindung liegt die Aufgabe zugrunde, ein Koppelelement für ein asynchrones Zeitvielfachübermittlungssystem zu schaffen, das mit geringerem Schaltungsaufwand realisiert ist.

Diese Aufgabe wird durch ein asynchrones Zeitvielfachübermittlungssystem der eingangs genannten Art dadurch gelöst, daß die Multiplexeranordnung Einzelmultiplexer zur Kopplung der Zubringerleitungen mit den Puffern und eine mit den Vergleichern gekoppelte Steuerschaltung enthält, daß die Steuerschaltung in Abhängigkeit von dem von den von den Vergleichern gelieferten Vergleichersignalen die Einzelmultiplexer so steuert, daß diese die Kopplung zwischen den mit jeweils einer Zelle beaufschlagten Zubringerleitungen und den Puffern in vorbestimmter Reihenfolge herstellen, und
daß durch Steuerung mittels der Steuerschaltung ein Multiplexer zur Kopplung der Puffer in zyklischer Reihenfolge mit der Abnehmerleitung vorgesehen ist.

Bei diesem asynchronen Zeitvielfachübermittlungssystem, das ein Koppelelement enthält, werden die Zellen zuerst einem Vergleicher zugeführt, der überprüft, ob die Zellen auf die Abnehmerleitung zu übertragen sind. Hierbei werden nur Zellen mit einer Nutzinformation (Nutzzellen) auf die Abnehmerleitung übertragen. Zellen, die für die Abnehmerleitung bestimmt sind, werden über eine Multiplexeranordnung Puffern zur Speicherung zugeführt. Dabei stellt die Multiplexeranordnung solche Kopplungen zwischen Zubringerleitungen und Puffern her, daß die Zellen in einer bestimmten Reihenfolge und gleichmäßig verteilt den Puffern zugehen. Beispielsweise können, wenn vier Puffer und Zubringerleitungen vorhanden sind und in einem ersten Zeitrahmen jeweils eine Zelle auf einer zweiten und dritten Zubringerleitung vorhanden sind, die Zellen jeweils in einen ersten und zweiten Puffer eingelesen werden. Dabei kann die Zelle auf der zweiten Zubringerleitung in den ersten Puffer und die Zelle auf der dritten Zubringerleitung in den zweiten Puffer gegeben werden. Wenn beim nächsten Zeitrahmen jeweils eine Zelle auf der ersten, dritten und vierten Zubringerleitung geliefert wird, dann wird die Zelle auf der ersten Zubringerleitung in einen dritten Puffer und die Zelle auf der dritten Zubringerleitung in einen vierten Puffer eingelesen. Die Zelle auf der vierten Zubringerleitung wird wieder dem ersten Puffer zugeführt. Es wird somit eine zyklische Einlesung der Puffer realisiert. Durch diese Art der Steuerung der Multiplexeranordnung sind die Zellen gleichmäßig über die Puffer verteilt. Eine solche Multiplexeranordnung ist weniger aufwendig als die Realisierung im bekannten Koppelelement. Außerdem ist hierbei nicht erforderlich, daß die Zellen mit jeweils einem Bit zu kennzeichnen sind, das angibt, ob die Nachricht auf die Abnehmerleitung geliefert werden soll. Es werden nur einfache Schaltvorgänge in der Multiplexeranordnung vorgenommen. Aus den Puffern wird pro Zeitrahmen eine Zelle ausgelesen. Hierfür wird der mit den Ausgängen der Puffer verbundene Multiplexer zyklisch gesteuert. Leerzellen, d.h. Zellen ohne Nachricht, werden nicht in die Puffer eingelesen. Die Multiplexeranordnung wird nur für die Zellen freigegeben, die für die Abnehmerleitung bestimmt sind. Bei diesem Koppelelement werden die Zellen entsprechend ihrem zeitlichen Eintreffen durchgeschaltet, d.h. es werden alle Zellen eines Zeitrahmens auf die Abnehmerleitung gegeben, bevor die Zellen des nächsten Zeitrahmens auf eine Abnehmerleitung geführt werden.

Die Multiplexeranordnung enthält eine Steuerschaltung, die mit den Vergleichern verbunden ist und welche die Einzelmultiplexer so steuert, daß diese die Kopplung zwischen den mit jeweils einer Zelle beaufschlagten Zubringerleitungen und den Puffern in vorbestimmter Reihenfolge herstellen. Der Vergleicher führt der Steueranordnung Vergleichersignale zu, aus denen die Steueranordnung ermittelt, auf welcher Zubringerleitung Zellen zugeführt worden sind. Nach der Auswertung der Vergleichersignale gibt die Steuerschaltung der Anzahl der während eines Zeitrahmens eingetroffenen Zellen entsprechende Anzahl von Einzelmultiplexern frei.

Wie oben erwähnt, enthält die Multiplexeranordnung Einzelmultiplexer. Die Anzahl der Einzelmultiplexer ist gleich der Anzahl der Zubringerleitungen. Jeder Eingang eines Einzelmultiplexers ist mit jeweils einer anderen Zubringerleitung und der Ausgang eines Einzelmultiplexers mit einem Puffer gekoppelt.

Da die Anzahl der Einzelmultiplexer gleich der Anzahl der Zubringerleitungen ist, ist folglich auch die Anzahl der Puffer gleich der Anzahl der Zubringerleitungen. Unter der Voraussetzung, daß die Puffer nicht vollständig belegt sind, gehen, wenn während eines Zeitrahmens auf jeder Zubringerleitung Zellen eintreffen, keine Zellen verloren.

Um die Puffer in vorbestimmter Reihenfolge und gleichmäßig belegen zu können, muß die Steuerschaltung speichern, welcher Puffer während eines Zeitrahmens zuletzt zur Einlesung verwendet worden ist. Beim nächsten Zeitrahmen, der eine Zelle enthält, gibt die Steuerschaltung den nächsten Puffer der vorbestimmten Reihenfolge zur Einlesung frei.

In einer Fortbildung der Erfindung ist vorgesehen, daß die Steuerschaltung einen Dekoder zur Auswertung der Vergleichersignale und zur Lieferung der Information zu einer Auswerteschaltung, auf welcher Zubringerleitung pro Zeitrahmen Zellen eingetroffen sind, und daß die Auswerteschaltung zur Freigabe der Puffer, in die Zellen eingelesen werden sollen, und zur Steuerung der Einzelmultiplexer in der Art vorgesehen ist, daß die freigegebenen Puffer mit den mit Zellen beaufschlagten Zubringerleitungen gekoppelt werden.

In der Steuerschaltung wird also in einem Dekoder ausgewertet, auf welcher Zubringerleitung Zellen zugeführt worden sind. Die Auswerteschaltung ermittelt daraufhin die Anzahl der freizugebenden Puffer und die Einzelmultiplexer, welche die Kopplung zwischen einer Zubringerleitung und einem Puffer herstellen.

Die Steuerschaltung wird auch noch zur Steuerung des Multiplexers, dessen Ausgang mit der Abnehmerleitung verbunden ist, verwendet werden. Hierbei werden die Puffer in zyklischer Reihenfolge mit der Abnehmerleitung verbunden. Dazu ist in der Steuerschaltung zur Steuerung des Multiplexers ein modulo-n-Zähler vorgesehen, wobei n gleich der Anzahl der Puffer ist, und des weiteren eine Detektionsschaltung zur Freigabe des Zählers bei Belegung der Puffer mit Zellen. Durch Veränderung des Zählerinhaltes bei jedem Zeitrahmen schafft der Zähler eine Verbindung zwischen einem Puffer und der Abnehmerleitung. Die Detektionsschaltung kann ein Signal von dem Dekoder enthalten, wodurch mitgeteilt wird, wieviel Zellen bei einem Zeitrahmen von den Zubringerleitungen geliefert worden sind.

Der Vergleich in einem jeder Zubringerleitung zugeordneten Vergleicher kann durchgeführt werden, indem der Vergleicher prüft, ob die Wegekennung einer Zelle, die in einem mit jeder Zubringerleitung verbundenen Register gespeichert ist, zugeordnet ist. Falls die Zuordnung vorliegt, nimmt der Vergleicher eine Änderung eines von ihm erzeugten Vergleichersignals vor.

Die Erfindung bezieht sich auch auf ein Koppelelement eines solchen asynchronen Zeitvielfachübermittlungssystems.

Ein Ausführungsbeispiel der Erfindung wird nachstehend anhand der Zeichnungen näher erläutert. Es zeigen:
Fig. 1 ein Blockschaltbild eines asynchronen Zeitvielfachübermittlungssystems,
Fig. 2 ein vereinfacht dargestelltes Koppelelement und Fig. 3 ein Beispiel für die Verarbeitung von auf der Zubringerleitung eintreffenden Zellen in dem Koppelelement nach Fig. 2.

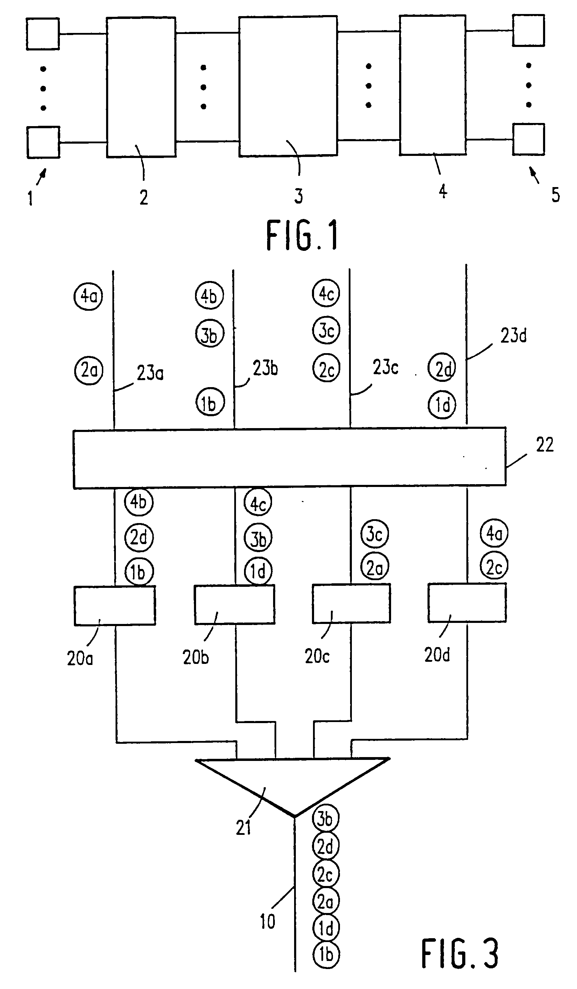

Mit dem in Fig. 1 dargestellten Blockschaltbild läßt sich das Prinzip eines asynchronen Zeitvielfachübermittlungssystems erläutern. Die Signale eines Endgerätes, z.B. Fernsprech-, Bild- oder Tonsignale, werden in einem Paketisierer segmentiert und mit einem Kopffeld, in dem eine Wegekennung vorhanden ist, versehen. Die Wegekennung beinhaltet die Angabe über das Ziel der Signale. Ein solches Endgerät und der Paketisierer bilden eine Teilnehmerendeinrichtung 1. Die Daten eines solchen Endgerätes werden dabei innerhalb eines Zeitintervalles (Zeitrahmen) in Form von Zellen übertragen. Die Dauer eines solchen Zeitrahmens hängt dabei von der zugrundegelegten Taktfrequenz einer Übermittlungskomponente ab. Solche Zellen bestehen aus dem schon oben erwähnten Kopffeld und der Nutzinformation. Sollen innerhalb eines Zeitrahmens keine Daten übertragen werden, so wird eine Leerzelle gebildet, d.h. eine Zelle, in der im Kopffeld angegeben ist, daß keine weitere Information folgt. Solche Leerzellen dienen zur Synchronisation des Systems. Die Zellen, die eine Nutzinformation tragen, werden als Nutzzellen bezeichnet.

In dem in Fig. 1 dargestellten Blockschaltbild werden die Daten z.B. von 64 Teilnehmerendeinrichtungen 1 über 64 Leitungen mit jeweils einer Kapazität von 150 Mbit/s zu einer Anschlußgruppe 2 übertragen. In der Anschlußgruppe 2 werden die Daten zusammengefaßt und über eine geringere Anzahl von Leitungen mit einer höheren Kapazität übertragen. Beispielsweise können diese Daten über 16 Leitungen mit einer Kapazität von jeweils 600 Mbit/s geführt werden. In einem nachfolgenden Koppelfeld 3, das sich aus mehreren Koppelfeldblöcken und diese aus mehreren Koppelelementen zusammensetzt, findet durch Auswertung der Wegekennung eine Vermittlung der Daten statt, indem sie auf eine bestimmte Abnehmerleitung gegeben werden. Ein Koppelelement besteht hierbei aus einer Schaltungsanordnung, die an mehrere Zubringerleitungen und eine Abnehmerleitung angeschlossen ist. Die Schaltungsanordnung bzw. das Koppelelement können Daten, die auf die mit dem Koppelelement verbundene Abnehmerleitung weitergeleitet werden sollen, ermitteln und die erforderlichen Wege innerhalb der Schaltungsanordnung dafür schaffen. Das Koppelfeld 3 ist wieder mit mehreren Leitungen, z.B. 16 Leitungen mit einer Kapazität von 600 Mbit/s mit einer Anschlußgruppe 4 verbunden. Die Anschlußgruppe 4 leitet die empfangenen Daten über Leitungen an Teilnehmerendeinrichtungen 5 weiter. Beispielsweise sind hierbei 64 Leitungen mit jeweils einer Kapazität von 150 Mbit/s vorgesehen. Ein solches System überträgt noch Daten von der Teilnehmerendeinrichtung 5 auf die Teilnehmerendeinrichtung 1.

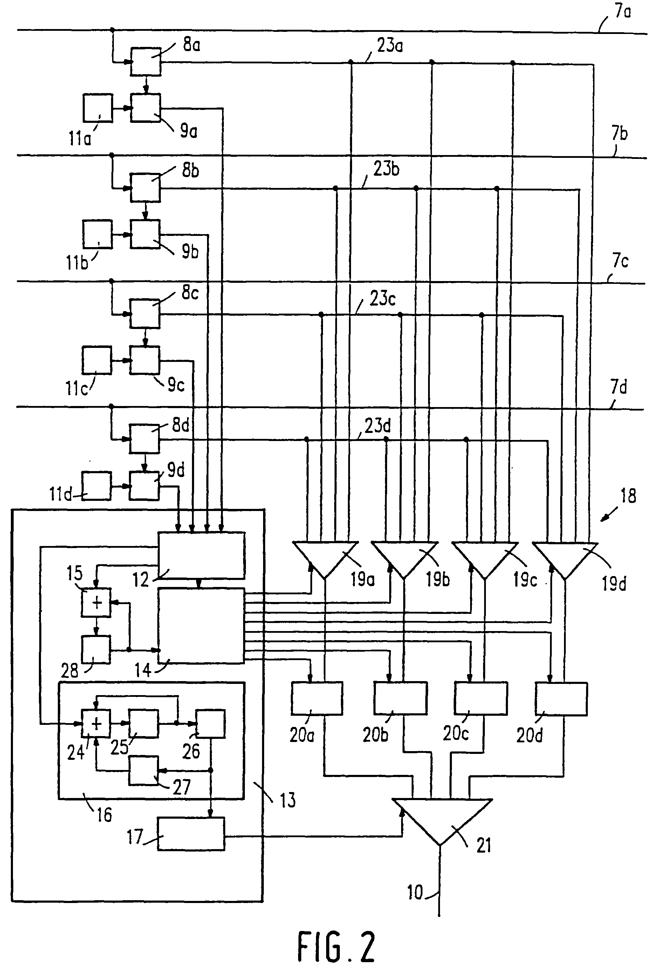

In Fig. 2 ist ein Koppelelement, das Teil eines Koppelfeldes ist, dargestellt. Das Koppelelement ist mit vier Zubringerleitungen 7a bis d verbunden. An jede Zubringerleitung 7a bis d ist jeweils ein Register 8a bis d angeschlossen. In jedem Register werden die auf den Zubringerleitungen zugeführten Zellen gespeichert. Ein mit jedem Register jeweils verbundener Vergleicher 9a bis d vergleicht die Wegekennung einer in den Registern 8a bis d gespeicherten Zelle mit der Adresse einer Abnehmerleitung 10, die in jeweils einem Adressenspeicher 11a bis d abgelegt ist. Unter der Wegekennung wird hierbei die Wegelenkungsinformation verstanden, die eine Angabe über ein Teilziel innerhalb einer Übermittlungsanordnung enthält. Der Ausgang jedes Vergleichers 9a bis d ist mit einem Dekoder 12 verbunden, der Teil einer Steuerschaltung 13 ist. Der Dekoder 12, der die von den Vergleichern 9a bis d gelieferten Vergleichersignale dekodiert, liefert Steuersignale einer Auswerteschaltung 14, einem Addierer 15 und einer Detektionsschaltung 16, die alle Teil der Steuerschaltung 13 sind. Die Steuerschaltung 13 enthält noch ein Register 28, dessen Eingang mit dem Ausgang des Addierers 15 verbunden ist und dessen Ausgang mit einem weiteren Eingang des Addierers 15 und der Auswerteschaltung 14 verbunden ist. Die Detektionsschaltung 16 gibt einen modulo-4-Zähler 17 frei, der ebenfalls Teil der Steuerschaltung 13 ist.

Die Steuerschaltung 13 gehört zu einer Multiplexeranordnung 18, die auch vier Einzelmultiplexer 19a bis d beinhaltet. Jeder Einzelmultiplexer 19a bis d enthält vier Eingänge, die an jeweils einem Ausgang der Register 8a bis d über Leitungen 23a bis d angeschlossen sind. Die Einzelmultiplexer 19a bis d, deren Ausgänge mit dem Eingang von jeweils einem Puffer 20a bis d verbunden sind, werden von der Auswerteschaltung 14 gesteuert. Die Puffer 20a bis d werden von der Auswerteschaltung 14 freigegeben. Die Puffer 20a bis d sind FIFO's. Die Puffer sollten so dimensioniert sein, daß ein Überlauf praktisch nicht stattfinden kann. Die Speichergröße der FIFO's läßt sich durch Verkehrssimulationen des Koppelelementes ermitteln. Die von den Ausgängen der Puffer 20a bis d wegführenden Leitungen gehen auf die Eingänge eines Multiplexers 21, der von dem Zähler 17 gesteuert wird und der die verschiedenen ankommenden Leitungen wechselweise mit der Abnehmerleitung 10 verbindet.

Es sei erwähnt, daß die in Fig. 2 dargestellten Leitungen aus Gründen der Übersichtlichkeit in Form einer Leitung gezeichnet sind, obwohl sie teilweise aus mehreren parallelen Leitungen bestehen. Auch die für die Steuerung der einzelnen digitalen Schaltungselemente erforderlichen Taktleitungen und Taktgeneratoren sind nicht dargestellt.

Die Funktionsweise des Koppelelementes nach Fig. 2 wird im folgenden mit Hilfe der Fig. 3 erläutert. In Fig. 3 sind aus Vereinfachungsgründen die vier Einzelmultiplexer 19a bis d als ein Block 22 dargestellt. Auf diesen Block 22 führen die vier von den Registern 8a bis d abgehenden Leitungen 23a bis 23d. Die vier Ausgänge des Blockes 22 sind mit den Puffern 20a bis 20d gekoppelt. Die vier Ausgänge der Puffer 20a bis d sind mit den vier Eingängen des Multiplexers 21 verbunden, dessen Ausgang an die Abnehmerleitung 10 angeschlossen ist.

Von der Multiplexeranordnung 18 werden nur Zellen mit einer Nutzinformation (Nutzzellen) auf die Abnehmerleitung 10 gegeben. Eine Leerzelle wird folglich nicht auf die Abnehmerleitung 10 geführt. Ist in den Puffern keine Nutzzelle mehr vorhanden, die auf die Abnehmerleitung 10 gegeben werden kann, so erzeugt ein hier nicht näher dargestellter Leerzellengenerator Leerzellen, die auf die Abnehmerleitung 10 gegeben werden.

Zur Erläuterung sei angenommen, daß während eines ersten Zeitrahmens auf den Leitungen 23b und 23d Nutzzellen mit einer Nachricht eintreffen, die als Zellen 1b und 1d bezeichnet sind, wobei die Ziffer den jeweiligen Zeitrahmen und der Buchstabe die jeweilige Leitung bezeichnet, auf der die Zelle zugeführt wird. Die Zelle 1b wird von der Multiplexeranordnung 18 (oder Block 22) dem Puffer 20a zugeführt. Dazu verbindet der Einzelmultiplexer 19a den Ausgang des Registers 8b mit dem Eingang des Puffers 20a. Die Zelle 1d wird in den Puffer 20b eingelesen. Hierzu verbindet der Einzelmultiplexer 19b den Ausgang des Registers 8d mit dem Eingang des Puffers 20b. Es sei angenommen, daß während des nächsten Zeitrahmens auf der Leitung 23a eine Zelle 2a, auf der Leitung 23c eine Zelle 2c und auf der Leitung 23d eine Zelle 2d eintreffen. Die Zelle 2a wird in den Puffer 20c und die Zelle 2c in den Puffer 20d eingelesen. Die Zelle 2d wird wieder in den Puffer 20a eingelesen. Während des zweiten Zeitrahmens ist aus dem Puffer 20a die Zelle 1b über den Multiplexer 21 auf die Abnehmerleitung 10 gegeben worden. Beispielsweise sollen während eines dritten Zeitrahmens auf der Leitung 23b eine Zelle 3b und auf der Leitung 23c eine Zelle 3c transportiert werden. Die Zelle 3b und die Zelle 3c werden in die Puffer 20b und 20c eingelesen. Die Zelle 1d wird währenddessen aus dem Puffer 20b auf die Abnehmerleitung 10 gegeben. Während eines vierten Zeitrahmens sollen Zellen 4a, 4b und 4c auf den Leitungen 23a, 23b und 23c eintreffen. Die Zellen 4a und 4c werden in die Puffer 20d, 20a und 20b eingelesen. In dieser Zeit ist die Zelle 2a der Abnehmerleitung 10 zugeführt worden.

Durch diese Art der Belegung werden die Zellen auf die Puffer gleichmäßig verteilt, d.h. die Puffer werden optimal ausgenutzt. In dem in Fig. 3 dargestellten Beispiel werden die Puffer in einer vorbestimmten Reihenfolge eingeschrieben. Das bedeutet, daß eine Zelle, die auf der Leitung 23a zugeführt wird, zuerst in den Puffer 20a und eine Zelle auf der Leitung 23b in den Puffer 20b eingelesen wird. Die Reihenfolge ist also so festgelegt, daß die Zellen zuerst in die Puffer eingeschrieben werden, die in der Zeichnung links liegen. Die beim nächsten Zeitrahmen der Leitung 23a in der Zeichnung am nächsten liegende Zelle wird also in den Puffer eingeschrieben, das beim letzten Zeitrahmen der nächste zu belegende Puffer gewesen wäre.

Die zur Steuerung der Einzelmultiplexer 19a bis d, der Puffer 20a bis d und des Multiplexers 21 verwendete Steuerschaltung 13 dekodiert im Dekoder 12, auf welcher Zubringerleitung 7a bis d Zellen empfangen worden sind. Dazu erhält der Dekoder 12 Vergleichersignale von den Vergleichern 9a bis d. Das Vergleichersignal eines Vergleichers kann z.B. bei einer Leerzelle oder einer Zelle, die für eine andere Abnehmerleitung bestimmt ist, einen niedrigen Signalzustand und bei einer Zelle, die für die Abnehmerleitung 10 bestimmt ist, einen hohen Signalzustand aufweisen. Es sei vorausgesetzt, daß die Puffer 20a bis d bisher mit keiner Zelle belegt sind. Der Dekoder 12 teilt der Auswerteschaltung 14 mit, auf welchen Zubringerleitungen 7a bis d Zellen angekommen sind. Es sei angenommen, daß auf jeder Zubringerleitung 7a bis d Zellen eingetroffen sind. Daraufhin koppelt der Einzelmultiplexer 19a die Leitung 23a mit dem Puffer 20a, der Einzelmultiplexer 19b die Leitung 23b mit dem Puffer 20b, der Einzelmultiplexer 19c die Leitung 23c mit dem Puffer 20c und der Einzelmultiplexer 19d die Leitung 23d mit dem Puffer 20d. Sollten beispielsweise auf den Zubringerleitungen 7a und 7c keine Zellen vorhanden sein, so koppelt der Einzelmultiplexer 19a nicht die Leitung 23a mit dem Puffer 20a sondern die Leitung 23b mit dem Puffer 20a und der Einzelmultiplexer 19b die Leitung 23d mit dem Puffer 20b. Die Einzelmultiplexer 19c und d werden nicht betätigt.

Beim Einlesevorgang der Puffer 20a bis d wertet die Auswerteschaltung 14 noch ein Signal aus, das sie vom Register 28 erhält. Es sei vorausgesetzt, daß das Register 28 den Inhalt Null aufweist. Der Dekoder 12 liefert dem Addierer die Anzahl der Zellen pro Zeitrahmen. Beim ersten Zeitrahmen wird also im Addierer 15 der Inhalt des Registers 28 zur Anzahl der empfangenen Zellen addiert und diese im Register 28 abgespeichert. Beim nächsten Zeitrahmen erfährt die Auswerteschaltung 14 aus dem Inhalt des Registers 28, bei welchem Puffer zuletzt eingelesen worden ist. Da der Addierer 15 ein modulo-4-Addierer ist, entsteht, wenn das Additionsergebnis größer als drei ist, ein Überlauf. Beispielsweise sind während eines ersten Zeitrahmens drei Zellen eingelesen worden und während eines zweiten darauffolgenden Zeitrahmens zwei Zellen eingelesen worden; das Ergebnis der Addition ist dann Eins. Die Auswerteschaltung erfährt aus dieser Zahl, daß beim letzten Zeitrahmen zuletzt der Puffer 20a belegt worden ist, da die Puffer 20a bis 20d in zyklischer Reihenfolge belegt werden. Es werden also, wenn kein Puffer belegt ist, zuerst der Puffer 20a, dann der Puffer 20b, dann der Puffer 20c und letztlich der Puffer 20d zur Speicherung betätigt.

Zur Steuerung des Multiplexers 21 ist die Detektionsschaltung 16 und der modulo-4-Zähler 17 vorgesehen. Die Detektionsschaltung 16 enthält einen Addierer 24, der ein Signal des Dekoders 12 erhält, ein Register 25, eine Vergleichsschaltung 26 und einen Komplementbilder 27. Der Ausgang des Addierers 24 ist mit dem Eingang des Registers 25 und dessen Ausgang mit dem Eingang der Vergleichsschaltung 26 und einem weiteren Eingang des Addierers 24 verbunden. Der Ausgang der Vergleichsschaltung 26 ist mit dem Zähler 17 und dem Eingang des Komplementbilders, der mit seinem Ausgang an einen weiteren Eingang des Addierers 24 angeschlossen ist, verbunden.

Wenn in den Puffern 20a bis d keine Zelle vorhanden ist, so ist im Register 25 der Inhalt von Null gespeichert. Dem Addierer 24 wird vom Dekoder 12 die Zahl der neu in die Puffer 20a bis d zu speichernden Zellen zugeführt. Der Addierer addiert die Anzahl der zu speichernden Zellen mit dem Inhalt des Registers 25. Das Additionsergebnis wird dann im Register 25 abgespeichert. In der Vergleichsschaltung 26 wird geprüft, ob die Zahl im Register 25 größer als Null ist. Falls die Zahl größer als Null ist, findet beim nächsten Zeitrahmen mittels des Komplementbilders 27 auch eine Addition mit der Zahl "- 1" statt. Der Zähler 17 bekommt auch die Information von der Vergleichsschaltung 26, daß im Reqister 25 noch eine Zahl größer als Null gespeichert ist. Daraufhin steuert der Zähler 17 den Multiplexer 21 so an, daß dieser von einem Eingang auf den nächsten Eingang umschaltet. Beispielsweise ist während eines ersten Zeitrahmens der Puffer 20a mit der Abnehmerleitung 10 verbunden. Durch die Ansteuerschaltung des modulo-4-Zählers 17 wird eine Verbindung zwischen dem Puffer 20b und der Abnehmerleitung 10 geschaffen. Auf diese Art werden die Zellen aus den Puffern 20a bis 20d zyklisch ausgegeben.

Bei dem aus Vereinfachungsgründen mit vier Zubringerleitungen dargestellten Koppelelement kann die Anzahl der Zubringerleitungen sehr viel größer sein.

## Patentansprüche

1. Asynchrones Zeitvielfachübermittlungssystem mit einem Koppelelement,
- das zur Übertragung von bestimmten auf Zubringerleitungen (7a bis d) eingetroffenen Zellen auf eine Abnehmerleitung (10) vorgesehen ist,
- das mittels jeweils eines mit einer Zubringerleitung (7a bis d) gekoppelten Vergleichers (9a bis d) zur Prüfung vorgesehen ist, ob die in den Zellen enthaltene Wegekennung der Abnehmerleitung (10) zugeordnet ist, und
- das eine Multiplexeranordnung (18) zur Kopplung der Zubringerleitungen (7a bis d) mit Puffern (20a bis d) und zur gleichmäßigen Verteilung der für die Abnehmerleitung (10) bestimmten, während eines Zeitrahmens eintreffenden Zellen auf die Puffer (20a bis d) enthält,
dadurch gekennzeichnet,
daß die Multiplexeranordnung (18) Einzelmultiplexer (19a bis d) zur Kopplung der Zubringerleitungen (7a bis d) mit den Puffern (20a bis d) und eine mit den Vergleichern (9a bis d) gekoppelte Steuerschaltung (13) enthält,
daß die Steuerschaltung (13) in Abhängigkeit von dem von den von den Vergleichern (9a bis d) gelieferten Vergleichersignalen die Einzelmultiplexer (19a bis d) so steuert, daß diese die Kopplung zwischen den mit jeweils einer Zelle beaufschlagten Zubringerleitungen (7a bis d) und den Puffern (20a bis d) in vorbestimmter Reihenfolge herstellen, und
daß durch Steuerung mittels der Steuerschaltung (13) ein Multiplexer (21) zur Kopplung der Puffer (20a bis d) in zyklischer Reihenfolge mit der Abnehmerleitung (10) vorgesehen ist.

2. Asynchrones Zeitvielfachübermittlungssystem nach Anspruch 1,
dadurch gekennzeichnet, daß die die Anzahl der Einzelmultiplexer (19a bis d) gleich der Anzahl der Zubringerleitungen (7a bis d) ist, daß jeder Eingang eines Einzelmultiplexers (19a bis d) mit jeweils einer anderen Zubringerleitung gekoppelt ist und daß der Ausgang eines Einzelmultiplexers (19a bis d) mit einem Puffer (20a bis d) gekoppelt ist.

3. Asynchrones Zeitvielfachübermittlungssystem nach Anspruch 2,
dadurch gekennzeichnet, daß die Steuerschaltung (13) zur Speicherung vorgesehen ist, welcher Puffer (20a bis d) während eines Zeitrahmens zuletzt zur Einlesung verwendet worden ist, und beim nächsten, eine Zelle mit Nutzinformation enthaltenen Zeitrahmens zur Freigabe des nächsten Puffer der vorbestimmten Reihenfolge für eine Einlesung vorgesehen ist.

4. Asynchrones Zeitvielfachübermittlungssystem nach Anspruch 3,
dadurch gekennzeichnet,
daß die Steuerschaltung (13) einen Dekoder (12) zur Auswertung der Vergleichersignale und zur Lieferung der Information zu einer Auswerteschaltung (14), auf welcher Zubringerleitung (7a bis d) pro Zeitrahmen Zellen eingetroffen sind, und
daß die Auswerteschaltung (14) zur Freigabe der Puffer (20a bis d), in die Zellen eingelesen werden sollen, und zur Steuerung der Einzelmultiplexer (19a bis d) in der Art vorgesehen ist, daß die freigegebenen Puffer mit den mit Zellen beaufschlagten Zubringerleitungen (7a bis d) gekoppelt werden.

5. Asynchrones Zeitvielfachübermittlungssystem nach Anspruch 4,
dadurch gekennzeichnet, daß die Steuerschaltung (13) zur Steuerung des Multiplexers (21) einen modulo-n-Zähler (17), wobei n gleich der Anzahl der Puffer (20a bis d) ist, und eine Detektionsschaltung (16) zur Freigabe des Zählers (17) bei Belegung der Puffer (20a bis d) mit Zellen enthält und daß der Zähler (17) durch Veränderung seines Zählerinhaltes bei jedem Zeitrahmen zur Schaffung einer Verbindung zwischen einem Puffer (20a bis d) und der Abnehmerleitung (10) vorgesehen ist.

6. Asynchrones Zeitvielfachübermittlungssystem nach einem der vorhergehenden Ansprüche,
dadurch gekennzeichnet, daß der jeder Zubringerleitung (7a bis d) zugeordnete Vergleicher (9a bis d) zur Prüfung vorgesehen ist, ob die Wegekennung einer Zelle, die in einem mit jeder Zubringerleitung verbundenen Register (8a bis d) gespeichert ist, der Abnehmerleitung (10) zugeordnet ist und zur Vornahme einer Änderung eines von ihm erzeugten Vergleichersignals vorgesehen ist, falls die Zuordnung vorliegt.

7. Koppelelement für ein asynchrones Zeitvielfachübermittlungssystem,
- das zur Übertragung von bestimmten auf Zubringerleitungen (7a bis d) eingetroffenen Zellen auf eine Abnehmerleitung (10) vorgesehen ist,
- das mittels jeweils eines mit einer Zubringerleitung (7a bis d) gekoppelten Vergleichers (9a bis d) zur Prüfung vorgesehen ist, ob die in den Zellen enthaltene Wegekennung der Abnehmerleitung (10) zugeordnet ist, und
- das eine Multiplexeranordnung (18) zur Kopplung der Zubringerleitungen (7a bis d) mit Puffern (20a bis d) und zur gleichmäßigen Verteilung der für die Abnehmerleitung (10) bestimmten, während eines Zeitrahmens eintreffenden Zellen auf die Puffer (20a bis d) enthält,
dadurch gekennzeichnet,
daß die Multiplexeranordnung (18) Einzelmultiplexer (19a bis d) zur Kopplung der Zubringerleitungen (7a bis d) mit den Puffern (20a bis d) und eine mit den Vergleichern (9a bis d) gekoppelte Steuerschaltung (13) enthält,
daß die Steuerschaltung (13) in Abhängigkeit von dem von den von den Vergleichern (9a bis d) gelieferten Vergleichersignalen die Einzelmultiplexer (19a bis d) so steuert, daß diese die Kopplung zwischen den mit jeweils einer Zelle beaufschlagten Zubringerleitungen (7a bis d) und den Puffern (20a bis d) in vorbestimmter Reihenfolge herstellen, und
daß durch Steuerung mittels der Steuerschaltung (13) ein Multiplexer (21) zur Kopplung der Puffer (20a bis d) in zyklischer Reihenfolge mit der Abnehmerleitung (10) vorgesehen ist.

## Claims

1. Asynchronous time-division multiplex transmission system comprising an interconnection element,
- which transmits certain cells that have come in via incoming trunks (7a to d) by an outgoing trunk (10),
- which checks via a comparator (9a to d) coupled to an incoming trunk (7a to d) whether the routing identification code contained in the cells is assigned to the outgoing trunk (10), and
- which includes a multiplexer arrangement (18) for coupling the incoming trunks (7a to d) to buffers (20a to d) and for uniformly distributing the cells arriving during a time frame and destined for the outgoing trunk (10), characterized in that the multiplexer arrangement (18) comprises individual multiplexers (19a to d) for coupling the incoming trunks (7a to d) to the buffers (20a to d) and a control circuit (13) coupled to the comparators (9a to d), in that the control circuit (13) controls the individual multiplexers (19a to d) in response to the comparing signals produced by the comparators (9a to d) in such a way that these multiplexers establish the coupling between the incoming trunks (7a to d) carrying each a cell and the buffers (20a to d) in a predetermined sequence, and in that, by controlling via the control circuit (13), a multiplexer (21) cyclically couples the buffers (20a to d) to the outgoing trunk (10).

2. Asynchronous time-division multiplex transmission system as claimed in Claim 1, characterized in that the number of individual multiplexers (19a to d) is equal to the number of incoming trunks (7a to d), in that each input of an individual multiplexer (19a to d) is coupled to a different incoming trunk and in that the output of an individual multiplexer (19a to d) is coupled to a buffer (20a to d).

3. Asynchronous time-division multiplex transmission system as claimed in Claim 2, characterized in that the control circuit (13) stores which buffer (20a to d) has been used last for writing during a time frame, and with the next time frame that contains a cell of payload information, releases the next buffer of the predetermined sequence to be written.

4. Asynchronous time-division multiplex transmission system as claimed in Claim 3, characterized in that the control circuit (13) includes a decoder (12) for evaluating the comparing signals and for applying to an evaluation circuit (14) the information stating on which incoming trunk (7a to d) cells have arrived per time frame, and in that the evaluation circuit (14) releases the buffers (20a to d) in which the cells are to be written and controls the individual multiplexers (19a to d), so that the released buffers are coupled to the incoming trunks (7a to d) that carry cells.

5. Asynchronous time-division multiplex transmission system as claimed in Claim 4, characterized in that the control circuit (13) for controlling the multiplexer (21) includes a modulo-n counter (17) where n equals the number of buffers (20a to d), and a detection circuit (16) for releasing the counter (17) when cells are written in the buffers (20a to d), and in that the counter (17), by changing its count with each time frame, creates a connection between a buffer (20a to d) and the outgoing trunk (10).

6. Asynchronous time-division multiplex transmission system, characterized in that the comparator (9a to d) assigned to each incoming trunk (7a to d) checks whether the routing identification code of a cell, which code is stored in a register (8a to d) connected to each incoming trunk, is assigned to the outgoing trunk (10), and makes a change of a comparing signal produced thereby if the assignment exists.

7. Interconnection element for an asynchronous time-division multiplex transmission system
- which transmits certain cells that have come in via incoming trunks (7a to d) by an outgoing trunk (10),
- which checks via a comparator (9a to d) coupled to an incoming trunk (7a to d) whether the routing identification code contained in the cells is assigned to the outgoing trunk (10), and
- which includes a multiplexer arrangement (18) for coupling the incoming trunks (7a to d) to buffers (20a to d) and for uniformly distributing the cells arriving during a time frame and destined for the outgoing trunk (10), characterized in that the multiplexer arrangement (18) comprises individual multiplexers (19a to d) for coupling the incoming trunks (7a to d) to the buffers (20a to d) and a control circuit (13) coupled to the comparators (9a to d), in that the control circuit (13) controls the individual multiplexers (19a to d) in response to the comparing signals produced by the comparators (9a to d) in such a way that these multiplexers establish the coupling between the incoming trunks (7a to d) carrying each a cell and the buffers (20a to d) in a predetermined sequence, and in that, by controlling via the control circuit (13), a multiplexer (21) cyclically couples the buffers (20a to d) to the outgoing trunk (10).

## Revendications

1. Système de transfert asynchrone à multiplexage temporel comportant un élément de commutation:
- qui est destiné à transmettre certaines cellules arrivées sur des lignes entrantes (7a à 7d) à une ligne sortante (10),
- qui est destiné à vérifier à l'aide, respectivement, d'un comparateur (9a à 9d) couplé à une ligne entrante (7a à 7d), si l'indicatif de trajet contenu dans les cellules a été affecté à la ligne sortante (10), et
- qui contient un dispositif de multiplexage (18) pour coupler les lignes entrantes (7a à 7d) à des mémoires tampons (20a à 20d) et pour répartir uniformément les cellules destinées à la ligne sortante (10) arrivées au cours d'une trame temporelle, sur la mémoire tampon (20a à 20d), caractérisé en ce que le dispositif de multiplexage (18) contient des multiplexeurs individuels (19a à 19d) pour coupler les lignes entrantes (7a à 7d) aux mémoires tampons (20a à 20d) et un circuit de commande (13) couplé aux comparateurs (9a à 9d), en ce que le circuit de commande (13) commande, en fonction des signaux délivrés par les comparateurs (9a à 9d), les multiplexeurs individuels (19a à 19d) de telle sorte que ceux-ci établissent la liaison entre les lignes entrantes (7a à 7d) alimentées respectivement par une cellule et les mémoires tampons (20a à 20d) dans une séquence prédéterminée, et en ce que, par commande à l'aide du circuit de commande (13), un multiplexeur (21) est prévu pour coupler la mémoire tampon (20a à 20d) à la ligne sortante (10) en séquence cyclique.

2. Système de transfert asynchrone à multiplexage temporel selon la revendication 1, caractérisé en ce que le nombre de multiplexeurs individuels (19a à 19d) est égal au nombre de lignes entrantes (7a à 7d), en ce que chaque entrée d'un multiplexeur (19a à 19d) est couplée respectivement à une autre ligne entrante et en ce que la sortie d'un multiplexeur individuel (19a à 19d) est couplée à une mémoire tampon (20a à 20d).

3. Système de transfert asynchrone à multiplexage temporel selon la revendication 2, caractérisé en ce que le circuit de commande (13) est prévu pour mémoriser la mémoire tampon (20a à 20d) qui a été utilisée en dernier lieu pour un stockage au cours d'une trame temporelle, et en ce que, lors de la trame temporelle suivante contenant une cellule avec des informations utiles, il est prévu pour libérer la mémoire tampon suivante de la séquence prédéterminée pour une mémorisation.

4. Système de transfert asynchrone à multiplexage temporel selon la revendication 3, caractérisé en ce que le circuit de commande (13) contient un décodeur (12) pour évaluer les signaux des comparateurs et pour délivrer à un circuit d'évaluation (14) des informations au sujet de la ligne entrante (7a à 7d) par laquelle des cellules sont arrivées à chaque trame temporelle, et en ce que le circuit d'évaluation (14) est prévu pour libérer les mémoires tampons (20a à 20d), dans lesquelles des cellules doivent être stockées, et pour commander les multiplexeurs individuels (19a à 19d) de telle sorte que les mémoires libérées soient couplées aux lignes entrantes (7a à 7d) alimentées en cellules.

5. Système de transfert asynchrone à multiplexage temporel selon la revendication 4, caractérisé en ce que le circuit de commande (13) pour commander le multiplexeur (21) contient un compteur modulo n (17), n étant égal au nombre de mémoires tampons (20a à 20d), et un circuit de détection (16) pour libérer le compteur (17) lors de l'occupation des mémoires (20a à 20d) par des cellules, et en ce que le compteur (17) est destiné, par modification de son comptage à chaque trame temporelle, à établir une liaison entre une mémoire tampon (20a à 20d) et la ligne sortante (10).

6. Système de transfert asynchrone à multiplexage temporel selon l'une quelconque des revendications précédentes, caractérisé en ce que le comparateur (9a à 9d) affecté à chaque ligne entrante (7a à 7d) est destiné à vérifier si l'indicatif de trajet d'une cellule, qui est mémorisée dans un registre (8a à 8d) connecté à chaque ligne entrante, est affecté à la ligne sortante (10) et est destiné à effectuer une modification d'un signal de comparaison produit par ses soins, au cas où il y a affectation.

7. Elément de commutation pour un système de transfert asynchrone à multiplexage temporel,
- qui est destiné à transmettre certaines cellules arrivées sur des lignes entrantes (7a à 7d) à une ligne sortante (10),
- qui est destiné à vérifier à l'aide, respectivement, d'un comparateur (9a à 9d) couplé à une ligne entrante (7a à 7d), si l'indicatif de trajet contenu dans les cellules a été affecté à la ligne sortante (10), et
- qui contient un dispositif de multiplexage (18) pour coupler les lignes entrantes (7a à 7d) à des mémoires tampons (20a à 20d) et pour répartir uniformément les cellules destinées à la ligne sortante (10) arrivées au cours d'une trame temporelle, sur la mémoire tampon (20a à 20d), caractérisé en ce que le dispositif de multiplexage (18) contient des multiplexeurs individuels (19a à 19d) pour coupler les lignes entrantes (7a à 7d) aux mémoires tampons (20a à 20d) et un circuit de commande (13) couplé aux comparateurs (9a à 9d), en ce que le circuit de commande (13) commande, en fonction des signaux délivrés par les comparateurs (9a à 9d), les multiplexeurs individuels (19a à 19d) de telle sorte que ceux-ci établissent le couplage entre les lignes entrantes (7a à 7d) alimentées respectivement par une cellule et les mémoires tampons (20a à 20d) dans une séquence prédéterminée, et en ce que, par commande à l'aide du circuit de commande (13), un multiplexeur (21) est prévu pour coupler la mémoire tampon (20a à 20d) à la ligne sortante (10) en séquence cyclique.
